Europäisches Patentamt

European Patent Office

Office européen des brevets

(19)

(11) **EP 1 158 827 B1**

(12) **FASCICULE DE BREVET EUROPEEN**

(45) Date de publication et mention
de la délivrance du brevet:
**02.07.2003 Bulletin 2003/27**

(51) Int Cl.⁷: **H04Q 7/38**

(21) Numéro de dépôt: **01401300.7**

(22) Date de dépôt: **18.05.2001**

(54) **Procédé de controle de transfert d'un canal dans un réseau de radiocommunication cellulaire**

Verfahren zur Weiterreichungssteuerung in einem zellularen Funkkommunikationsnetzwerk

Method for controlling handover in a cellular radiocommunications network

(84) Etats contractants désignés:
**AT BE CH CY DE DK ES FI FR GB GR IE IT LI LU
MC NL PT SE TR**

(30) Priorité: **23.05.2000 FR 0006562**

(43) Date de publication de la demande:
**28.11.2001 Bulletin 2001/48**

(73) Titulaire: **Nortel Networks Limited
St. Laurent, Quebec H4S 2A9 (CA)**

(72) Inventeurs:
• **Fauconnier, Denis
78470 Saint-Rémy-Lès-Chevreuse (FR)**

• **Mousset, Claire
Maidenhead, SL6 6HA (GB)**

(74) Mandataire: **Loisel, Bertrand
Cabinet Plasseraud,
84, rue d'Amsterdam
75440 Paris Cédex 09 (FR)**

(56) Documents cités:
**WO-A-92/02088**          **WO-A-93/25021**
**WO-A-98/09458**          **GB-A- 2 236 458**

## Description

La présente invention concerne le domaine des radiocommunications, et en particulier les techniques de chiffrement utilisées dans les réseaux cellulaires.

L'invention trouve notamment application dans les réseaux cellulaires de troisième génération du type UMTS (« Universal Mobile Telecommunication System ») utilisant des techniques d'accès multiple à répartition par codes (CDMA, « Code Division Multiple Access »).

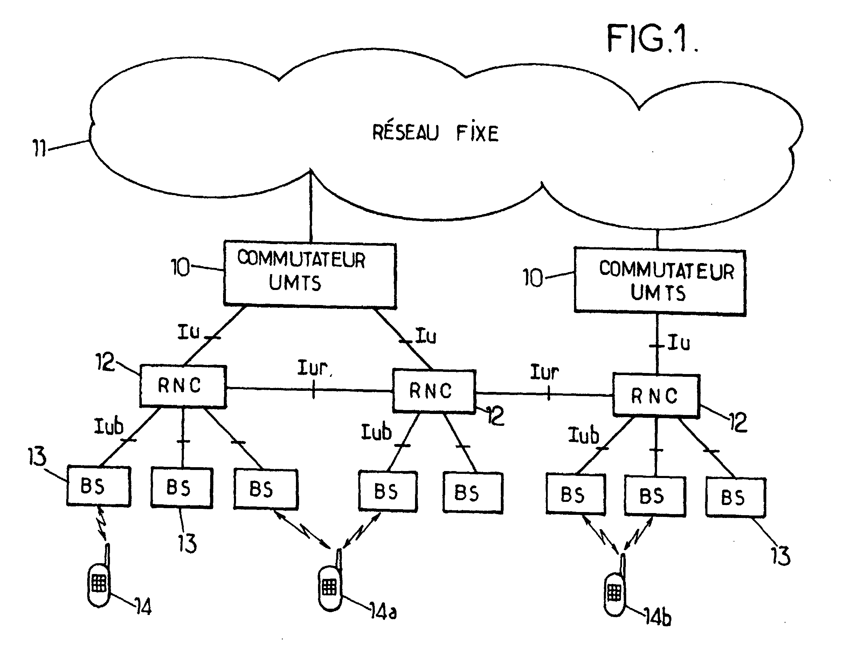

L'invention est décrite ci-après dans son application à un réseau UMTS, dont la figure 1 montre l'architecture.

Les commutateurs du service mobile 10, appartenant un coeur de réseau (CN, « Core Network »), sont reliés d'une part à un ou plusieurs réseaux fixes 11 et d'autre part, au moyen d'une interface dite *lu,* à des équipements de contrôle 12, ou RNC (« Radio Network Controller »). Chaque RNC 12 est relié à une ou plusieurs stations de base 13 au moyen d'une interface dite *lub.* Les stations de base 13, réparties sur le territoire de couverture du réseau, sont capables de communiquer par radio avec les terminaux mobiles 14, 14a, 14b appelés UE (« User Equipment »). Les stations de base peuvent être regroupées pour former des noeuds appelés « node B ». Certains RNC 12 peuvent en outre communiquer entre eux au moyen d'une interface dite *lur.* Les RNC et les stations de base forment un réseau d'accès appelé UTRAN (« UMTS Terrestrial Radio Access Network »).

L'UTRAN comporte des éléments des couches 1 et 2 du modèle ISO en vue de fournir les liaisons requises sur l'interface radio (appelée *Uu*), et un étage 15A de contrôle des ressources radio (RRC, « Radio Resource Control ») appartenant à la couche 3, ainsi qu'il est décrit dans la spécification technique 3G TS 25.301, « Radio Interface Protocol », version 3.4.0 publiée en mars 2000 par le 3GPP (3rd Génération Partnership Project). Vu des couches supérieures, l'UTRAN agit simplement comme relais entre l'UE et le CN.

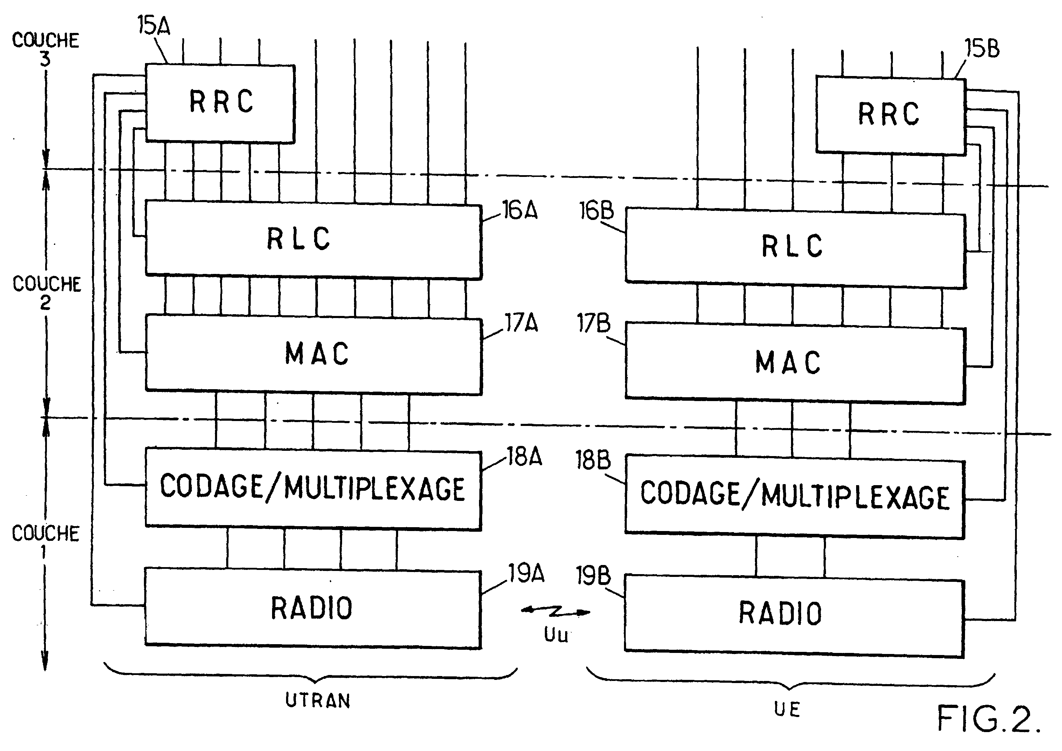

Le figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, « Radio Link Control ») et un étage 17A, 17B de contrôle d'accès au médium (MAC, « Medium Access Control »). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, « UTRAN Overall Description », version 3.1.0 publiée en janvier 2000 par le 3GPP). Les étages RRC, RLC et MAC se trouvent dans le RNC 12. La couche 1 se trouve par exemple dans le node B. Une partie de cette couche peut toutefois se trouver dans le RNC 12.

Lorsque plusieurs RNC sont impliqués dans une communication avec un UE, il y a généralement un RNC de desserte appelé SRNC (« Serving RNC »), où se trouvent les modules relevant de la couche 2 (RLC et MAC), et au moins un RNC relais appelé DRNC (« Drift RNC ») auquel est relié une station de base avec laquelle l'UE est en liaison radio. Des protocoles appropriés assurent les échanges entre ces RNC sur l'interface *lur,* par exemple ATM (« Asynchronous Transfer Mode ») et AAL2 (« ATM Adaptation Layer No. 2 »). Ces mêmes protocoles peuvent également être employés sur l'interface lub pour les échanges entre un node B et son RNC.

Les couches 1 et 2 sont chacune contrôlées par la sous-couche RRC, dont les caractéristiques sont décrites dans la spécification technique 3G TS 25.331, « RRC Protocol Spécification », version 3.1.0 publiée en octobre 1999 par le 3GPP. L'étage RRC 15A, 15B supervise l'interface radio. Il traite en outre des flux à transmettre à la station distante selon un « plan de contrôle », par opposition au « plan d'utilisateur » qui correspond au traitement des données d'utilisateur issues de la couche 3.

La sous-couche RLC est décrite dans la spécification technique 3G TS 25.322, « RLC Protocol Spécification », version 3.2.0 publiée en mars 2000 par le 3GPP. Dans le sens de l'émission, l'étage RLC 16A, 16B reçoit, suivant des canaux logiques respectifs, des flux de données constitués d'unités de données de service (RLC-SDU) issues de la couche 3. Un module RLC de l'étage 16A, 16B est associé à chaque canal logique pour effectuer notamment une segmentation des unités RLC-SDU du flux en unités de données de protocole (RLC-PDU) adressées à la sous-couche MAC et comprenant un en-tête RLC optionnel. Dans le sens de la réception, un module RLC effectue inversement un réassemblage des unités RLC-SDU du canal logique à partir des unités de données reçues de la sous-couche MAC.

L'étage RLC 16A, 16B peut avoir plusieurs modes de fonctionnement en fonction notamment du type de canal logique. Dans la suite de la présente description, on considérera le mode transparent de la sous-couche RLC, qui convient à un canal logique relatif à une communication en mode circuit. Dans ce mode transparent, le module RLC effectue les opérations de segmentation et réassemblage lorsqu'elles sont nécessaires, et il n'introduit aucun en-tête dans les unités RLC-PDU.

La sous-couche MAC est décrite dans la spécification technique 3G TS 25.321, « MAC Protocol Specification », version 3.3.0 publiée en mars 2000 par le 3GPP. Elle transpose un ou plusieurs canaux logiques sur un ou plusieurs canaux de transport TrCH (« Transport CHannel »). Dans le sens de l'émission, l'étage MAC 17A, 17B peut multiplexer un ou plusieurs canaux logiques dans un même canal de transport Sur un tel canal de transport, l'étage MAC 17A, 17B délivre des blocs de transport successifs TrBk (« Transport Block ») consistant chacun en un en-tête MAC optionnel et une unité RLC-PDU issue d'un canal logique associé.

Pour chaque TrCH, la sous-couche RRC fournit à la sous-couche MAC un ensemble de formats de transport (TFS, « Transport Format Set »). Un format de transport comprend un intervalle de temps de transmission TTI (« Transmission Time Interval ») égal à 10, 20, 40 ou 80 ms, une taille de bloc de transport, une taille d'ensemble de blocs de transport et des paramètres définissant le schéma de protection à appliquer dans le TrCH par la couche 1 pour détecter et corriger les erreurs de transmission. En fonction du débit courant sur le ou les canaux logiques associés au TrCH, l'étage MAC 17A, 17B sélectionne un format de transport dans le TFS assigné par la sous-couche RRC, et il délivre dans chaque TTI un ensemble de blocs de transport conformément au format sélectionné, en indiquant ce format à la couche 1.

La couche 1 peut multiplexer plusieurs TrCH sur un canal physique donné. Dans ce cas, la sous-couche RRC assigne un ensemble de combinaisons de formats de transport (TFCS, « Transport Format Combination Set ») au canal physique, et la sous-couche MAC sélectionne dynamiquement une combinaison de formats de transport dans cet ensemble TFCS, ce qui définit les formats de transport à utiliser dans les différents TrCH multiplexés.

L'UMTS utilise la technique CDMA d'étalement de spectre, c'est-à-dire que les symboles transmis sont multipliés par des codes d'étalement constitués d'échantillons appelés « chips » dont la cadence (3,84 Mchip/s dans le cas de l'UMTS) est supérieure à celle des symboles transmis. Les codes d'étalement distinguent différents canaux physiques PhCH (« Physical CHannel ») qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés. Pour l'UMTS en mode FDD (« Frequency Division Duplex ») sur la liaison descendante, un code de brouillage (« scrambling code ») est alloué à chaque station de base, et différents canaux physiques utilisés par cette station de base sont distingués par des codes de canal (« channelisation codes ») mutuellement orthogonaux. La station de base peut aussi utiliser plusieurs codes de brouillage mutuellement orthogonaux. Sur la liaison montante, la station de base utilise le code de brouillage pour séparer les UE émetteurs, et éventuellement le code de canal pour séparer les canaux physiques issus d'un même UE. Pour chaque PhCH, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques sont organisés en trames de 10 ms qui se succèdent sur la fréquence porteuse utilisée par la station de base. Chaque trame est subdivisée en 15 tranches temporelles (« timeslots ») de 666 μs. Chaque tranche peut porter les contributions superposées d'un ou plusieurs canaux physiques, comprenant des canaux communs et des canaux dédiés DPCH (« Dedicated Physical CHannel »). Chaque DPCH véhicule avec les données une indication de combinaison de formats de transport TFCI (« Transport Format Combination Indicator ») issue de la sous-couche MAC, permettant au module MAC destinataire de retrouver la structure des TrBk.

Il est possible, pour une même communication, d'établir plusieurs DPCH correspondant à des codes de canal différents, dont les facteurs d'étalement peuvent être égaux ou différents. Cette situation est notamment rencontrée lorsqu'un DPCH ne suffit pas à fournir le débit de transmission requis par l'application. Par ailleurs, cette même communication peut utiliser un ou plusieurs canaux de transport. Le codage et le multiplexage des flux de symboles d'information issus des TrCH sur les PhCH sont décrits en détail dans la spécification technique 3G TS 25.212, «Multiplexing and channel coding (FDD) », version 3.0.0 publiée en octobre 1999 par le 3GPP.

En ce qui concerne chaque canal logique pour lequel le module de traitement de la sous-couche RLC fonctionne en mode transparent, l'étage MAC 17A, 17B assure en outre un chiffrement des informations transmises et un déchiffrement des informations reçues. Sur le canal de transport correspondant, les TrBk relatifs à ce canal logique consistent chacun en une unité RLC-PDU chiffrée selon un mécanisme décrit dans le chapitre 8 de la spécification 3G TS 25.301 précitée.

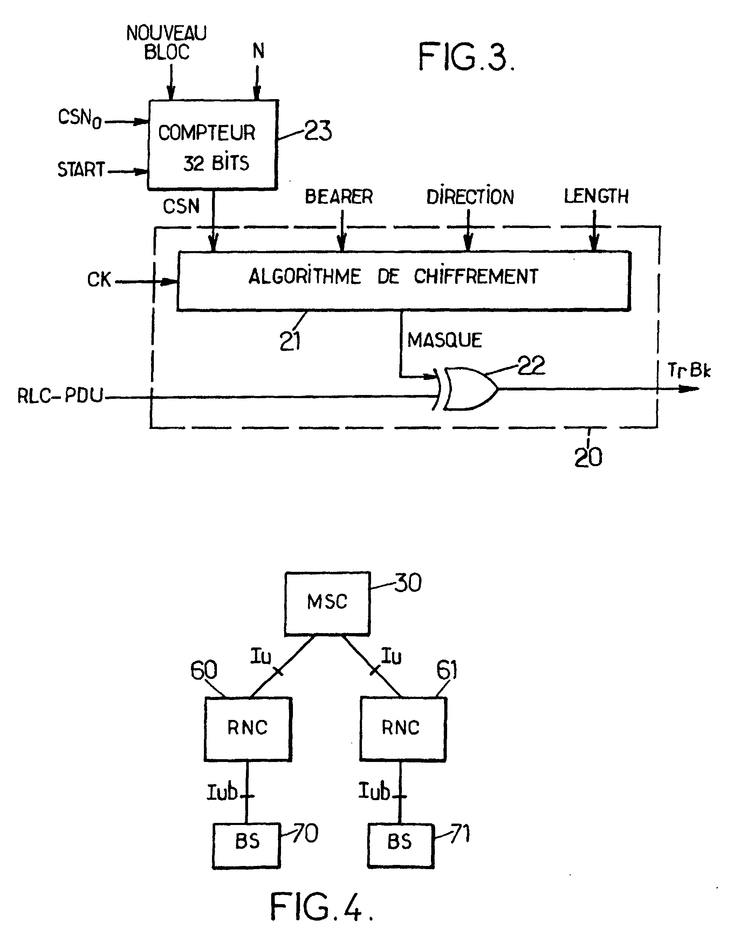

La figure 3 illustre le module de chiffrement 20 de l'étage MAC 17A, 17B du RNC ou de l'UE, utilisé pour un canal logique. Un algorithme de chiffrement 21 est exécuté pour générer un masque binaire qui est combiné aux bits d'information de l'unité RLC-PDU reçue en mode transparent du RLC, par une opération OU exclusif (porte 22). Un module identique est utilisable pour le déchiffrement L'algorithme 21 calcule le masque sur la base des paramètres suivants :

- CK : clé de chiffrement secrète de M = 32 bits, définie dans une phase préalable d'authentification entre le coeur de réseau et l'UE ;
- CSN: numéro de séquence de chiffrement (« Ciphering Sequence Number ») composé de M = 32 bits ;

- BEARER : identifiant de canal logique, servant à générer des masques différents pour les différents canaux logiques ;
- DIRECTION : bit indiquant le sens de transmission (montant ou descendant), servant à générer des masques différents dans les deux sens ;
- LENGTH : longueur du masque en nombre de bits, donné par l'étage RRC en fonction du format de transport.

L'algorithme 21 combine le numéro de M bits CSN à la clé CK dans le but d'éviter que le même masque soit utilisé pour chiffrer des blocs différents. Ce nombre CSN est incrémenté au rythme des trames radio de 10 ms. La figure 3 montre ainsi le compteur de 32 bits 23 qui délivre le paramètre CSN. Ce compteur incrémente le numéro CSN d'une quantité N à chaque nouveau bloc du canal logique, N étant le nombre de trames par TTI sur le canal de transport portant ce canal logique (N = 1, 2, 4 ou 8). Le compteur est donc incrémenté de 1 toutes les 10 ms, de 2 toutes les 20 ms, de 4 toutes les 40 ms ou de 8 toutes les 80 ms. A l'initialisation de la communication chiffrée, l'étage RRC fournit une valeur initiale $CSN_0$ du numéro CSN et une commande de démarrage du compteur 23 (START). Ces opérations sont effectuées à la fois dans le RNC où est exécutée la tâche MAC et dans l'UE.

Un problème considéré dans la présente invention est celui du transfert des compteurs CSN lors d'un déplacement du module MAC assurant la fonction de chiffrement dans l'infrastructure du réseau. Un tel déplacement a lieu dans le cadre d'une procédure de transfert impliquant un changement de ressource d'accès radio (handover). La procédure de transfert peut ainsi donner lieu à un changement de SRNC, ce qui nécessite que le compteur CSN du nouveau SRNC soit synchronisé avec celui du précédent SRNC (et de l'UE), alors que les interfaces *lu* et/ou *lur* dont disposent les RNC pour communiquer entre eux sont asynchrones. On peut également envisager des cas où le déplacement du module MAC aurait lieu à l'intérieur d'un même RNC, si celui-ci utilise des circuits différents pour gérer les ressources d'accès employées avant et après le transfert.

Différents scénarios possibles pour la procédure de transfert sont décrits dans la spécification technique 3G TR 25.832, « Manifestations of Handover and SRNS Relocation », version 3.0.0 publiée en octobre 1999 par le 3GPP. On distingue d'une part le handover en douceur, ou SHO (« soft handover »), qui utilise un mode de macrodiversité et qui peut éventuellement être suivi par un changement de SRNC appelé « relocalisation » et d'autre part le handover brusque, ou HHO (« hard handover »), qui correspond par exemple à un changement de fréquence porteuse (avec ou sans changement de RNC) et/ou à un transfert entre deux RNC (d'un même réseau d'accès ou de réseaux d'accès différents) ne pouvant pas communiquer entre eux par une interface *lur*. Un HHO peut avoir lieu à l'intérieur d'un UTRAN si plusieurs fréquences porteuses sont allouées à l'opérateur de celui-ci ou si des interfaces *lur* ne sont pas prévues entre tous les RNC de cet UTRAN. Un HHO peut également avoir lieu entre deux réseaux d'accès distincts, par exemple entre deux UTRAN ou entre un UTRAN et un système de nature différente basé sur une architecture fonctionnelle semblable permettant notamment d'utiliser les mêmes procédures de chiffrement, tel qu'un système de type GERAN (« GSM / EDGE Radio Access Network »).

L'UMTS en mode FDD supporte une technique de macrodiversité, qui consiste à prévoir qu'un UE puisse simultanément communiquer avec des stations de base distinctes de façon telle que, dans le sens descendant, l'UE reçoive plusieurs fois la même information et que, dans le sens montant, le signal radio émis par l'UE soit capté par les stations de base pour former des estimations différentes ensuite combinées dans l'UTRAN.

La macrodiversité procure un gain de réception qui améliore les performances du système grâce à la combinaison d'observations différentes d'une même information. Elle permet également de réaliser des transferts intercellulaires en douceur (SHO), lorsque l'UE se déplace.

En macrodiversité, l'aiguillage des canaux de transport pour l'émission multiple depuis l'UTRAN ou l'UE et la combinaison de ces canaux de transport en réception sont des opérations qui incombent à un module de sélection et combinaison appartenant à la couche 1. Ce module est à l'interface avec la sous-couche MAC, et il se trouve dans le RNC desservant l'UE. Si les stations de base impliquées dépendent de RNC différents communiquant à travers l'interface *lur*, l'un de ces RNC joue le rôle de SRNC et l'autre celui de DRNC.

Lorsqu'un SHO est complété, le lien radio entre l'UE et la station de base d'origine est rompu. Il se peut alors qu'aucune station de base à portée de laquelle se trouve l'UE ne soit dans la dépendance du SRNC.

L'UTRAN peut très bien continuer à supporter la communication de cette manière. Toutefois, cela n'est pas optimal puisqu'il est possible de se dispenser des échanges intervenant sur l'interface *lur* et de libérer le précédent SRNC, en faisant en sorte que le DRNC devienne le nouveau SRNC pour la communication en cours. C'est l'objet de la procédure de relocalisation (« SRNS Relocation », voir section 7.2.3.2 de la spécification 3G TS 25.401 précitée), déclenchée à l'initiative du précédent SRNC.

Cette procédure de relocalisation comporte le transfert des instances RLC et MAC (ainsi que du module de sélection et de recombinaison de la couche 1 si la macrodiversité est maintenue) du précédent SRNC vers le précédent DRNC.

Un problème que cela pose est le transfert du compteur CSN employé par l'algorithme de chiffrement en mode RLC transparent. En effet, ce compteur doit rester synchrone avec celui situé dans la couche MAC du côté de l'UE, alors que les liaisons entre les RNC (à travers l'interface *Iu* et le coeur de réseau ou à travers l'interface *Iur*) sont en principe asynchrones.

Le numéro CSN de 32 bits peut être décomposé en un numéro de trame de connexion CFN (« Connection Frame Number ») correspondant aux P bits de poids les plus faibles de CSN et en un numéro d'hypertrame HFN (« HyperFrame Number ») correspondant aux 32-P bits de poids les plus forts (P = 8 selon le chapitre 8 de la spécification 3G TS 25.301 précitée).

Le RNC supervisant chaque cellule desservie par une station de base 13 tient à jour pour cette cellule un numéro de trame système SFN (« System Frame Number »), codé sur Q = 12 bits, qui est incrémenté à chaque nouvelle trame radio de 10 ms. Ce numéro SFN est diffusé par la station de base sur ses canaux communs de contrôle.

Un UE mesure le décalage temporel entre les signaux qu'il capte depuis des cellules voisines de sa cellule courante et sa propre horloge. Avant le déclenchement d'un SHO vers une cellule cible, l'UE fournit à son SRNC le décalage qu'il a mesuré pour cette cellule cible, qui correspond au décalage, dans une plage de $2^P \times 10$ ms (soit 2,56 s), entre le compteur SFN de la cellule cible, obtenu sur le canal commun, et son propre compteur CFN. Ce décalage est déterminé, sur la base d'une détection de motifs de synchronisation, avec une précision temporelle nettement plus fine que 10 ms, par exemple de l'ordre du temps symbole. Il sert à caler temporellement l'émission de la nouvelle station de base, à laquelle il est adressé à travers l'interface *Iur*, afin qu'en mode de macrodiversité, les informations reçues par l'UE depuis les différentes stations ne soient pas trop décalées les unes par rapport aux autres, ce qui nécessiterait une quantité de mémoire excessive pour pouvoir opérer la combinaison des observations.

Du fait de la fourniture de ce décalage, le DRNC connaît a priori les P bits de poids faibles du compteur CSN à employer pour le chiffrement et le déchiffrement. Mais cela ne fournit pas les bits de poids forts (HFN). Les spécifications actuelles du 3GPP prévoient que la procédure de relocalisation comporte l'envoi par le SRNC d'un message « Relocation_Required » sur l'interface *Iu*, dans lequel est inséré le numéro HFN afin que le DRNC puisse synchroniser son compteur de séquence de chiffrement. A réception de ce message, le coeur de réseau lance la tâche qui conduira à l'aiguillage de la communication vers le DRNC, et retransmet de façon transparente le HFN à ce dernier.

Ces dispositions ne résolvent pas le problème précité parce qu'entre le moment où le SRNC transmet la valeur de HFN et celui où le DRNC la reçoit, le HFN en vigueur du côté de l'UE a pu être incrémenté. Cela se produit chaque fois que le HFN met plus de 2,56 s à être reçu par le DRNC, ce qui est difficile à éviter avec certitude compte tenu des files d'attente que peuvent rencontrer les messages dans le coeur de réseau asynchrone et des temps de traitement du message « Relocation_Required » par les commutateurs 10. Des erreurs peuvent aussi survenir si le HFN met moins de temps à arriver au DRNC : s'il est émis à un moment où CFN vaut 255 par exemple, il est très probable qu'il soit reçu par le DRNC une fois que la valeur de HFN aura augmenté au niveau de l'UE.

Le problème ci-dessus est rencontré, avec davantage d'acuité encore, dans les HHO qui sont exécutés sans utiliser le mode de macrodiversité.

Dans un HHO, il y a généralement une phase de diffusion double pendant laquelle la même information descendante est transmise simultanément sur les deux ressources d'accès. Ceci permet à l'UE de recevoir les informations qui lui sont destinées sans interruption dès qu'il passe sur la seconde ressource d'accès. Il faut donc que le RNC en charge de la cellule cible ait rapidement connaissance du compteur de séquence de chiffrement CSN relatif à l'UE lorsqu'un HHO doit être exécuté. D'autre part, le RNC de la cellule cible, s'il est différent du précédent SRNC, n'a généralement aucune connaissance préalable du compteur CFN puisqu'il n'y a pas de macrodiversité. La valeur envoyée par le précédent SRNC doit donc couvrir jusqu'aux bits de poids les plus faibles de CSN de sorte qu'elle sera très vraisemblablement obsolète lorsqu'elle sera reçue par le RNC de la cellule cible, compte tenu des délais d'acheminement dans le réseau asynchrone. Cet inconvénient est difficile à éliminer en l'absence de synchronisation des stations de base, laquelle n'est pas nécessaire au fonctionnement d'un réseau UMTS et n'est pas exploitée par la norme.

Il est à noter que dans les modes non-transparents de la sous-couche RLC, le problème considéré ci-dessus ne se pose pas. Ces modes non-transparents sont destinés aux transmissions par paquets, pour lesquelles il n'est généralement pas gênant d'interrompre momentanément la transmission lors d'un handover ou d'une procédure de relocalisation afin de s'assurer, par exemple par un mécanisme d'acquittement, que la bonne valeur de compteur a été reçue. D'autre part, c'est la sous-couche RLC qui assure la fonction de chiffrement/déchiffrement en mode non-transparent, en utilisant un numéro de séquence de l'en-tête de chaque unité RLC-PDU pour chiffrer les données contenues dans cette unité RLC-PDU. Ce numéro de séquence est transmis en clair, de sorte que les compteurs de chiffrement n'ont pas besoin d'être synchronisés aux deux extrémités.

Dans les systèmes GSM de seconde génération (« Global System for Mobile communication ») utilisant les techniques d'accès multiple à répartition dans le temps (TDMA, « Time Division Multiple Access »), le chiffrement est effectué uniquement sur l'interface air. L'incrémentation de la clé de chiffrement est basée sur la synchronisation par rapport aux hypertrames TDMA, qui est obtenue de façon non ambiguë de part et d'autre du lien radio dans le cadre du schéma de multiplexage temporel. En conséquence, le problème ci-dessus ne se pose pas non plus.

WO98/09458 décrit un système d'accès radio dérivé du GSM, dans lequel le chiffrement des communications n'est assuré que sur l'interface air. Ce système a pour contrainte de requérir une synchronisation des stations de base à l'échelle des multitrames TDMA. De plus, la synchronisation des compteurs de chiffrement est mise en défaut lorsque les échanges prévus entre les stations de base prennent un temps supérieur à la durée, relativement courte, d'une multitrame (120 ms).

Un but de la présente invention est d'apporter une solution au problème de synchronisation de compteurs de chiffrement en particulier dans le cas du HHO.

L'invention propose ainsi un procédé de contrôle d'un canal logique de communication en mode circuit entre un terminal radio et une infrastructure de radiocommunication cellulaire. L'infrastructure comporte au moins un coeur de réseau, des contrôleurs de réseau radio reliés au coeur de réseau et comprenant des premier et second contrôleurs, et des stations de base pourvues d'interfaces radio et reliées chacune à l'un des contrôleurs de réseau radio. Le procédé comprend les étapes suivantes :

- établir au moins un premier chemin de communication entre le coeur de réseau et le terminal, passant par l'une des stations de base utilisant une première ressource d'accès radio et par le premier contrôleur constituant un contrôleur maître pour ledit premier chemin ;
- transmettre de l'information relevant du canal logique suivant le premier chemin de communication ;
- établir au moins un second chemin de communication entre le coeur de réseau et le terminal, passant par l'une des stations de base utilisant une seconde ressource d'accès radio, différente de la première ressource, et par le second contrôleur constituant un contrôleur maître pour ledit second chemin ; et
- transmettre de l'information relevant du canal logique suivant le second chemin de communication.

L'information transmise suivant chaque chemin de communication est chiffrée dans une portion dudit chemin allant du contrôleur maître au terminal radio. Le chiffrement est effectué en fonction de paramètres comprenant une clé secrète et un numéro de séquence de chiffrement combiné à ladite clé. Le contrôleur maître et le terminal incrémentent conjointement le numéro de séquence de chiffrement au rythme de trames de durée déterminée, de façon à disposer des mêmes paramètres de chiffrement pour permettre le déchiffrement de l'information. Le second chemin est établi dans une procédure de transfert comprenant la transmission de données de réglage du premier contrôleur au second contrôleur, une phase d'émission simultanée de signaux radio sur les première et seconde ressources d'accès par les stations de base respectives des premier et second chemins, puis la suppression du premier chemin. Les signaux radio émis sur les première et seconde ressources d'accès au cours de la phase d'émission simultanée transportent la même information, ladite information étant chiffrée par le second contrôleur avec un numéro de séquence de chiffrement décalé en avance par rapport à celui utilisé par le premier contrôleur pour chiffrer l'information transmise le long du premier chemin. Le terminal radio bascule de la première ressource d'accès à la seconde ressource d'accès pendant la phase d'émission simultanée, en avançant le numéro de séquence de chiffrement de façon à l'aligner sur le numéro décalé utilisé par le second contrôleur.

La procédure de transfert comprend de préférence, après la réception des données de réglage par le second contrôleur, la transmission d'un message de commande de basculement du second contrôleur au terminal radio par l'intermédiaire du premier contrôleur. Ce message peut indiquer, par rapport à une référence de temps disponible au terminal radio et au second contrôleur, une trame d'initialisation à laquelle correspond une valeur d'initialisation du numéro de séquence de chiffrement décalé, ladite valeur d'initialisation étant déterminable par le terminal radio et par le second contrôleur.

Dans une réalisation du procédé, les numéros de séquence de chiffrement sont représentés sur M bits, et les données de réglage comprennent une quantité représentée par les M-P bits de poids les plus forts d'une valeur courante du numéro de séquence de chiffrement utilisé par le premier contrôleur, M et P étant des entiers tels que $0 \leq P < M$. Le message de commande de basculement peut alors indiquer les P bits de poids les plus faibles d'une valeur d'initialisation du numéro de séquence de chiffrement décalé et/ou ses M-P bits de poids les plus forts correspondant à ladite quantité, augmentée afin d'assurer l'avance du numéro de séquence de chiffrement décalé. Cette valeur d'initialisation du numéro décalé correspond à une trame d'initialisation déterminable par le terminal et par le second contrôleur.

Les données de réglage comprennent éventuellement des données représentatives d'un décalage entre le numéro de séquence de chiffrement utilisé par le premier contrôleur et une référence de temps disponible au second contrôleur.

Un autre aspect de la présente invention se rapporte à un réseau d'accès d'un système cellulaire de radiocommunication comprenant au moins un contrôleur de réseau radio agencé pour mettre en oeuvre un procédé tel que défini ci-dessus.

D'autres particularités et avantages de la présente invention apparaîtront dans la description ci-après d'exemples de réalisation non limitatifs, en référence aux dessins annexés, dans lesquels :

- la figure 1, précédemment commentée, est un schéma d'un réseau U MTS ;
- la figure 2, précédemment commentée, est un diagramme montrant l'organisation en couches de protocoles de communication employés sur l'interface radio du réseau UMTS ;

- la figure 3, précédemment commentée, est un schéma synoptique d'un module de chiffrement utilisé dans la couche MAC d'un réseau UMTS ;
- la figure 4 est un schéma simplifié d'un réseau UMTS auquel l'invention peut s'appliquer ;
- les figures 5 à 7 sont des schémas du réseau de la figure 4 montrant les liens actifs à différents instants d'une communication ;

L'infrastructure dessinée sur la figure 4 a une configuration volontairement simplifiée pour clarifier l'explication de l'invention. Le coeur de réseau comprend un commutateur du service mobile (MSC, « Mobile service Switching Center ») 30 pour le mode circuit, relié par des interfaces *Iu* à deux sous-systèmes de réseau radio (SRNS) ayant chacun un RNC 60, 61. Les deux RNC 60, 61 contrôlent respectivement des stations de base 70, 71 (node B) à travers des interfaces *Iub*. Dans l'exemple représenté, il n'y a pas d'interface *Iur* entre les deux RNC impliqués 60, 61. On notera qu'il pourrait y avoir une telle interface *Iur,* mais ne servant pas au handover, par exemple parce que celui-ci est entre deux fréquences porteuses différentes. Dans une autre réalisation, les RNC 60, 61 appartiennent à des réseaux d'accès différents (un UTRAN et un GERAN par exemple).

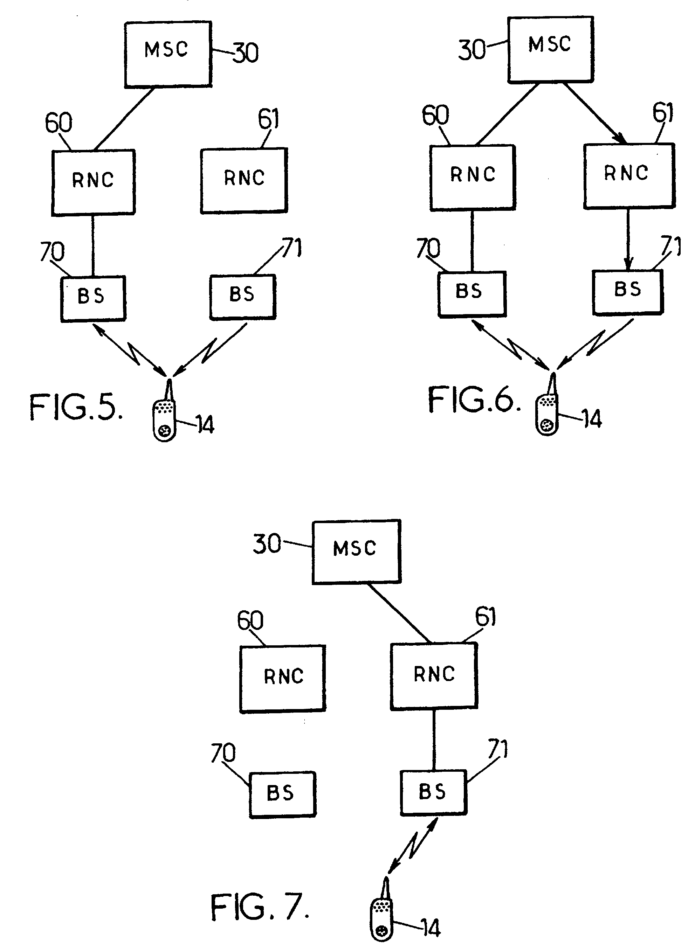

Les figures 5 à 7 montrent des chemins de communication actifs entre le coeur de réseau et un UE 14 lorsque celui-ci se déplace, dans un scénario typique de HHO dans la configuration de réseau de la figure 4. Initialement (figure 5), un chemin est établi de façon classique entre le MSC 30 du coeur de réseau et l'UE 14 à travers le RNC source 60 et la station de base 70 qui en dépend. Le SRNC 60 et l'UE ont chacun une instance MAC qui, pour chaque canal logique dédié en mode de circuit et chaque sens de communication, assure les fonctions de chiffrement et de déchiffrement de l'information transmise sur ce premier chemin, de la manière indiquée en référence à la figure 3. Les paramètres statiques (CK, BEARER, DIRECTION, LENGTH) du module 20 et les paramètres d'initialisation du compteur 23 ont été fournis par l'étage RRC.

L'UE effectue les mesures prescrites sur les canaux communs des cellules voisines de la sienne, en particulier ceux de la station de base 71 reliée au RNC 61 dans la situation illustrée par la figure 5. Lorsque l'analyse de ces mesures montre qu'un HHO est souhaitable vers la station de base 71, le SRNC 60 adresse à son MSC 30 un message de demande de HHO (« Handover_Prepare ») désignant le RNC cible 61. En particulier, pour la mise en oeuvre de l'invention, il est avantageux que l'UE 14 mesure le décalage temporel $\Delta$ entre son propre numéro de séquence de chiffrement CSN et le numéro de trame SFN diffusé par la station de base 71 sur ses canaux communs descendants. Ce décalage $\Delta$ est mesuré avec une résolution plus fine que celle des trames de 10 ms. On note $\Delta_k = (CSN - SFN)$ mod $2^k$ le nombre représenté par les k bits de poids les plus faibles de la partie entière du décalage $\Delta$ exprimé en unités de 10 ms ($1 \leq k \leq Q$). Le CSN étant sur M = 32 bits et le SFN sur Q = 12 bits, l'UE mesure $\Delta_Q = \Delta_{12}$. Dans le cadre des procédures de macrodiversité, il rend compte à l'UTRAN de $\Delta_P = \Delta_8$.

Lorsque le handover est déclenché, un second chemin est établi en commençant par le sens descendant (figure 6). La même information relevant du canal logique est transmise deux fois depuis le MSC 30 (ou plusieurs MSC), une fois par l'intermédiaire du RNC 60 et de la station de base 70 et une fois par l'intermédiaire du RNC 61 et de la station de base 71. Dans le sens montant, le terminal 14 garde les paramètres du canal physique du premier chemin jusqu'à ce qu'il reçoive un message « Handover_Command » lui demandant de basculer sur l'autre station de base 71. A réception de ce message, l'UE 14 exécute la commande, ce qui une fois le réseau synchronisé complète l'établissement du second chemin. Le premier chemin est alors supprimé (figure 7).

Dans la situation illustrée par la figure 6, l'information descendante est chiffrée sur les deux chemins entre le RNC et l'UE. La couche RRC a par exemple appliqué le processus suivant pour démarrer le compteur 23 utilisé pour chiffrer et déchiffrer dans la couche MAC du RNC cible 61

- dans le message « Handover_Prepare », le RNC source 60 inclut la valeur courante HFNE du numéro d'hypertrame HFN constitué par les M-P bits de poids les plus forts du compteur CSN qu'il utilise, cette valeur HFNE étant transmise par le coeur de réseau au RNC cible 61 ;
- après avoir reçu cette information, s'il accepte le handover, le RNC cible 61 détermine un numéro de trame d'initialisation SFNI du compteur 23, par rapport au compteur de trame SFN de la station de base cible 71, ainsi qu'une valeur d'initialisation correspondante CSNI du numéro de séquence de chiffrement, de façon telle que ce numéro de séquence soit en avance par rapport à celui utilisé sur le premier chemin entre le RNC 60 et l'UE ;
- lorsque l'instance MAC commence à chiffrer l'information reçue du MSC sur la voie descendante, pour une trame de numéro $SFN_0$ dans la cellule cible, la couche RRC du RNC 61 initialise le compteur 23 de cette instance MAC à la valeur $CSN_0 = (CSNI - SFNI + SFN_0)$ mod $2^M$, et elle commande la station de base 71 pour qu'elle émette vers l'UE 14.

Parallèlement, dans le message de commande de basculement qu'il adresse à l'UE à travers le coeur de réseau et le RNC source 60 (« Handover_Command »), le RNC cible 61 indique les paramètres CSNI et SFNI. Ainsi, au moment où l'UE effectue le basculement, il peut réinitialiser son compteur 23 de façon à l'aligner sur celui du RNC 61, ce qui permettra le chiffrement et le déchiffrement sur le second chemin.

En effet, l'UE connaît le $\Delta_Q$ et son CSN du chemin précédent au moment du basculement, de sorte qu'il peut en déduire le SFN correspondant dans la cellule cible : SFN = (CSN - $\Delta_Q$) mod $2^Q$, et donc réinitialiser immédiatement son compteur 23 à la valeur correcte pour le second chemin :

$$CSN_0 = (CSNI - SFNI + SFN) \bmod 2^M.$$

Dès qu'il bascule sur la station de base 71, l'UE a son numéro CSN synchronisé. Il peut donc recevoir immédiatement l'information descendante et émettre l'information montante avec le bon chiffrement Une fois que la station de base 61 a acquis la synchronisation, le second chemin est complété.

Cette synchronisation des compteurs CSN est juste dès lors que le temps d'exécution du HHO, entre l'émission par le RNC source du message « Handover_Prepare » et le basculement de l'UE, ne dépasse pas $2^Q \times$ 10 ms = 40 s, ce qui en pratique est toujours le cas.

L'avance du nouveau CSN par rapport à celui utilisé dans la cellule source sert à obtenir la double transmission servant à minimiser l'interruption due au HHO tout en évitant que le même masque de chiffrement soit produit pour chiffrer des blocs différents transmis sur la radio, ce qui est requis pour des raisons de sécurité.

On note que ces résultats sont obtenus sans nécessiter que le RNC cible reçoive de l'information sur le CFN d'origine, ce qui est problématique compte tenu de la transmission asynchrone à travers le coeur de réseau, ni même sur le décalage $\Delta$ observé par l'UE.

Pour éviter que le même masque de chiffrement soit produit pour chiffrer des blocs différents, la valeur d'initialisation CSNI doit être déterminée en fonction d'une information fournie depuis le RNC source, à savoir le paramètre HFNE. Le RNC 61 ajoute à ce paramètre un décalage $\theta > 0$ pour former les M-P bits de poids forts de la valeur d'initialisation CSNI, et il affecte une valeur prédéfinie CFNI aux P bits de poids faibles, par exemple CFNI = 0. Il prend donc CSNI = ((HFNE + $\theta$) $\times$ $2^P$ + CFNI) mod $2^M$.

Le décalage $\theta$ tient compte des temps d'exécution probables du HHO. Dans le cas où P = 8, on peut par exemple prendre $\theta$ = 8, ce qui fournit une marge largement suffisante de l'ordre de 20 s pour l'exécution du HHO. Ce décalage $\theta$ peut aussi être programmable.

Il est à noter que les contrôleurs 60 et 61 fonctionnant de la manière décrite ci-dessus en référence aux figures 4 à 7 pourraient, selon une variante de l'invention, être deux parties distinctes d'un équipement situé à un noeud donné du réseau. Cet équipement peut être de type RNC dans l'architecture UMTS, et les deux parties distinctes peuvent être des circuits gérant séparément les deux chemins en ce qui concerne au moins la couche MAC, ces circuits communiquant entre eux de façon asynchrone. Ces circuits sont par exemple portés par deux cartes différentes ou contenus dans deux cabinets différents du RNC.

On notera encore que la procédure de HHO ci-dessus peut prendre diverses formes équivalentes. Ainsi, plutôt que de contenir explicitement CSNI et SFNI, le message de commande retourné du RNC cible à l'UE pourrait seulement la différence (CSNI - SFNI) mod $2^M$ qui suffit à la synchronisation, ou toute combinaison permettant de retrouver cette différence.

En outre, les données CSNI, SFNI indiquées par le RNC cible dans le message de commande retourné au RNC source et à l'UE peuvent, en totalité ou en partie, être implicites :

- si le décalage $\theta$ est fixe ou connu du RNC source, celui-ci peut déjà disposer des M-P bits de poids forts (HFNE + $\theta$) du paramètre CSNI, de sorte qu'il n'est pas indispensable qu'il les reçoive de nouveau s'il les transmet lui-même à l'UE ;
- si la valeur CFNI est fixe (par exemple 0), il n'est pas nécessaire de la transmettre à l'UE. Il en est de même si cette valeur est définie par rapport au SFN de la cellule cible puisque l'UE peut déterminer ce SFN à l'aide de son CFN et du décalage $\Delta_Q$ qu'il a mesuré ;
- si le SFNI est une valeur que l'UE peut connaître, par exemple parce qu'elle est fixe, il n'est pas nécessaire de lui communiquer. Cette observation vaut aussi pour seulement une partie de poids faible du SFNI.

Dans des cas où l'UE à rapporté au RNC source 60 une valeur de décalage $\Delta_k$ entre le CSN utilisé conjointement par l'UE et le RNC source et le SFN de la cellule cible (par exemple k = P ou k = Q), ce RNC 60 peut la communiquer au RNC cible, notamment avec le message « Handover_Prepare ». On peut alors envisager que la référence de temps disponible à l'UE par rapport à laquelle la trame d'initialisation du nouveau compteur CSN est définie soit constituée par les k bits de poids faibles du CSN précédent. En particulier, il peut avoir eu une phase de macrodiversité entre les RNC source et cible sur une première fréquence porteuse avant d'effectuer un HHO avec changement de porteuse vers le RNC cible. Dans un tel cas, le RNC cible dispose déjà du décalage $\Delta_Q$ ou $\Delta_P$, de sorte qu'il n'est pas obligatoire de le répéter au moment du HHO. Il se peut également qu'un autre UE ait eu une phase de macrodiversité entre les RNC source (SRNC) et cible (DRNC). Lorsque la procédure de HHO commence pour l'UE 14, le RNC source 60 peut alors déterminer la valeur pertinente du décalage $\Delta_k$ sans l'avoir nécessairement reçue de l'UE 14 : il la déduit du CFN des deux UE et du décalage mesuré et indiqué par l'autre UE.

D'autres références de temps peuvent encore être utilisées, si elles sont disponibles à la fois au RNC cible 61 et à l'UE ou au RNC source, pour exprimer le numéro de trame d'initialisation SFNI ou toute quantité liée à ce numéro, par exemple :

- le SFN d'une autre station de base reliée au RNC cible, dont le canal de contrôle commun a été détecté par l'UE (ou par un autre UE supervisé par le RNC source) ;
- le SFN d'une station de base quelconque, en particulier celui de la cellule source, si les RNC ont connaissance des écarts de SFN entre les différentes cellules, ce qui est parfois utilisé dans des services de localisation d'abonné ;
- une référence de temps commune aux RNC, obtenue par exemple au moyen de récepteurs de type GPS ou analogue captant des signaux synchronisés émis par une constellation de satellites.

## Revendications

1. Procédé de contrôle d'un canal logique de communication en mode circuit entre un terminal radio (14) et une infrastructure de radiocommunication cellulaire, l'infrastructure comportant au moins un coeur de réseau (30), des contrôleurs de réseau radio (60, 61) reliés au coeur de réseau et comprenant des premier et second contrôleurs, et des stations de base (70, 71) pourvues d'interfaces radio et reliées chacune à l'un des contrôleurs de réseau radio, le procédé comprenant les étapes suivantes :

   - établir au moins un premier chemin de communication entre le coeur de réseau et le terminal, passant par l'une des stations de base (70) utilisant une première ressource d'accès radio et par le premier contrôleur (60) constituant un contrôleur maître pour ledit premier chemin ;
   - transmettre de l'information relevant du canal logique suivant le premier chemin de communication ;
   - établir au moins un second chemin de communication entre le coeur de réseau et le terminal, passant par l'une des stations de base (71) utilisant une seconde ressource d'accès radio, différente de la première ressource, et par le second contrôleur (61) constituant un contrôleur maître pour ledit second chemin ; et
   - transmettre de l'information relevant du canal logique suivant le second chemin de communication,

   **caractérisé en ce que** l'information transmise suivant chaque chemin de communication est chiffrée dans une portion dudit chemin allant du contrôleur maître au terminal radio, le chiffrement étant effectué en fonction de paramètres comprenant une clé secrète (CK) et un numéro de séquence de chiffrement (CSN) combiné à ladite clé, le contrôleur maître et le terminal incrémentant conjointement le numéro de séquence de chiffrement au rythme de trames de durée déterminée, de façon à disposer des mêmes paramètres de chiffrement pour permettre le déchiffrement de l'information,

   le second chemin est établi dans une procédure de transfert comprenant la transmission de données de réglage du premier contrôleur au second contrôleur, une phase d'émission simultanée de signaux radio sur les première et seconde ressources d'accès par les stations de base respectives (70, 71) des premier et second chemins, puis la suppression du premier chemin,

   les signaux radio émis sur les première et seconde ressources d'accès au cours de la phase d'émission simultanée transportent la même information, ladite information étant chiffrée par le second contrôleur (61) avec un numéro de séquence de chiffrement décalé en avance par rapport à celui utilisé par le premier contrôleur (60) pour chiffrer l'information transmise le long du premier chemin,

   et le terminal radio (14) bascule de la première ressource d'accès à la seconde ressource d'accès pendant la phase d'émission simultanée, en avançant le numéro de séquence de chiffrement de façon à l'aligner sur le numéro décalé utilisé par le second contrôleur (61).

2. Procédé selon la revendication 1, dans lequel la procédure de transfert comprend, après la réception des données de réglage par le second contrôleur (61), la transmission d'un message de commande de basculement du second contrôleur au terminal radio (14) par l'intermédiaire du premier contrôleur (60).

3. Procédé selon la revendication 2, dans lequel le message de commande de basculement indique, par rapport à une référence de temps disponible au terminal radio (14) et au second contrôleur (61), une trame d'initialisation à laquelle correspond une valeur d'initialisation du numéro de séquence de chiffrement décalé, ladite valeur d'initialisation étant déterminable par le terminal radio et par le second contrôleur.

4. Procédé selon l'une quelconque des revendications précédentes, dans lequel les numéros de séquence de chiffrement (CSN) sont représentés sur M bits, et les données de réglage comprennent une quantité représentée par les M-P bits de poids les plus forts d'une valeur courante du numéro de séquence de chiffrement utilisé par le premier contrôleur, M et P étant des entiers tels que $0 \leq P < M$.

**5.** Procédé selon les revendications 2 et 4, dans lequel les P bits de poids les plus faibles d'une valeur d'initialisation du numéro de séquence de chiffrement décalé sont indiqués dans le message de commande de basculement.

**6.** Procédé selon la revendication 4, dans lequel l'avance du numéro de séquence de chiffrement décalé utilisé par le second contrôleur (61) par rapport à celui utilisé par le premier contrôleur (60) est réalisée en augmentant ladite quantité comprise dans les données de réglage reçues du premier contrôleur, et en attribuant les M-P bits de la quantité ainsi augmentée aux M-P bits de poids les plus forts d'une valeur d'initialisation du numéro décalé.

**7.** Procédé selon les revendications 2 et 6, dans lequel ladite quantité augmentée est indiquée dans le message de commande de basculement.

**8.** Procédé selon la revendication 5 ou 6, dans lequel la valeur d'initialisation du numéro décalé correspond à au moins une trame d'initialisation déterminable par le terminal radio (14) et par le second contrôleur (61 ).

**9.** Procédé selon l'une quelconque des revendications précédentes, dans lequel les données de réglage comprennent des données représentatives d'un décalage entre le numéro de séquence de chiffrement utilisé par le premier contrôleur (60) et une référence de temps disponible au second contrôleur.

**10.** Procédé selon la revendication 9, dans lequel ledit décalage est mesuré par le terminal (14) sur la base de signaux radio reçus en provenance d'une station de base (71) reliée au second contrôleur (61) et portant de l'information relative à ladite référence de temps.

**11.** Procédé selon la revendication 10, dans lequel ladite référence de temps comprend un compteur de trames tenu pour une station de base (71) reliée au second contrôleur (61).

**12.** Procédé selon les revendications 4 et 10, dans lequel l'information relative à ladite référence de temps correspond à un numéro de trame représenté sur Q bits, Q étant un entier tel que $P < Q < M$.

**13.** Procédé selon l'une quelconque des revendications 1 à 12, dans lequel les données de réglage sont transmises du premier contrôleur (60) au second contrôleur (61) par l'intermédiaire du coeur de réseau (30).

**14.** Procédé selon l'une quelconque des revendications 1 à 13, dans lequel les première et seconde ressources d'accès radio comprennent des fréquences porteuses différentes.

**15.** Procédé selon l'une quelconque des revendications 1 à 14, dans lequel les premier et second contrôleurs (60, 61) appartiennent à des réseaux d'accès différents.

**16.** Procédé selon l'une quelconque des revendications 1 à 14, dans lequel les premier et second contrôleurs (60, 61) sont situés à un même noeud de réseau, et comportent des circuits distincts relativement aux premier et second chemins, pour au moins une partie des protocoles de communication incluant les fonctions de chiffrement et de déchiffrement de l'information, lesdits circuits communiquant entre eux de façon asynchrone.

**17.** Réseau d'accès d'un système cellulaire de radiocommunication comprenant au moins un contrôleur de réseau radio comprenant les moyens pour mettre en oeuvre les étapes d'un procédé selon l'une quelconque des revendications précédentes.

**Patentansprüche**

**1.** Verfahren zur Steuerung eines logischen Kanals zur leitungsvermittelten Datenübertragung zwischen einem Funkterminal (14) und einer zellularen Infrastruktur zur Funkkommunikation, die mindestens ein Kernnetz (30), Funknetzkontroller (60, 61), die mit dem Kernnetz verbunden sind, und erste und zweite Kontroller umfassen, und mit Funkschnittstellen versehene Basisstationen (70, 71), wovon jede mit einem der Funknetzkontroller verbunden ist, enthält, wobei das Verfahren die folgenden Schritte umfasst:

- Erstellen wenigstens eines ersten Kommunikationswegs zwischen dem Kernnetz und dem Terminal, der über eine der Basisstationen (70) führt und dabei ein erstes Funkzugriffshilfsmittel nutzt und durch den ersten Kontroller (60) läuft, der einen Masterkontroller für den ersten Weg bildet;
- Übertragen der für den logischen Kanal relevanten Informationen über den ersten Kommunikationsweg;
- Erstellen wenigstens eines zweiten Kommunikationswegs zwischen dem Kernnetz und dem Terminal, der über die Basisstationen (71) führt und dabei ein zweites Funkzugriffhilfsmittel nutzt, das verschieden ist zum ersten Hilfsmittel, und durch den zweiten Kontroller (61) läuft, der einen Masterkontroller für den zweiten Weg bildet;
- Übertragen der für den logischen Kanal relevanten Informationen über den zweiten Kommunikationsweg,

**dadurch gekennzeichnet, dass** die längs des jeweiligen Kommunikationswegs übertragene Information in einem Teil des Weges, der vom Masterkontroller zum Funkterminal geht, codiert wird, wobei die Codierung in Abhängigkeit von Parametern erfolgt, die einen Geheimschlüssel (CK) und eine mit diesem Schlüssel kombinierte Code-Sequenz-Nummer (CSN) enthalten, wobei der Masterkontroller und das Terminal zusammen im Rhythmus von Zeitfenstern bestimmter Dauer die Nummer der Code-Sequenz erhöhen, derart, dass die gleichen Parameter, die zur Codierung vorgesehen sind, auch für die Decodierung der Information zur Verfügung stehen,
wobei der zweite Weg durch ein Weiterleitungsverfahren erstellt wird, das die Übertragung der Steuerungsdaten vom ersten Kontroller zum zweiten Kontroller, eine zeitlich synchronisierte Ausstrahlungsphase der Funksignale durch das erste und zweite Zugriffshilfsmittel über die jeweiligen Basisstationen (70, 71) des ersten und zweiten Weges, und anschließend die Unterdrückung des ersten Kanals umfasst,
wobei die Funksignale, die durch das erste und zweite Zugriffshilfsmittel im Laufe der zeitlich synchronisierten Ausstrahlungsphase ausgestrahlt werden, die gleiche Information übertragen, wobei die Information durch den zweiten Kontroller (61) mit einer vorgeschobenen Code-Sequenz-Nummer in Bezug auf diejenige codiert wird, die vom ersten Kontroller (60) zum Codieren der Information längs des ersten Wegs verwendet wird, und
wobei das Funkterminal (14) während der zeitlich synchronisierten Ausstrahlungsphase von dem ersten Zugriffshilfsmittel zum zweiten Zugriffshilfsmittel übergeht, und zwar unter Vorverlagerung der Code-Sequenz-Nummer, um sie an der vom zweiten Kontroller (61) benutzten verschobenen Nummer auszurichten.

2. Verfahren nach Anspruch 1, wobei der Weiterreichungsvorgang nach dem Empfang der Steuerdaten durch den zweiten Kontroller (61), die Übertragung einer Befehlsnachricht zum Übergehen zum zweiten Kontroller am Funkterminal (14) mit Hilfe des ersten Kontrollers (60) umfasst.

3. Verfahren nach Anspruch 2, wobei eine Befehlsnachricht zum Übergehen bezüglich einer am Funkterminal (14) und am zweiten Kontroller (61) verfügbaren Zeitreferenz ein Initialisierungszeitfenster angibt, dem ein Initialisierungswert einer verschobenen Code-Sequenz-Nummer entspricht, wobei der Initialisierungswert vom Funkterminal und dem zweiten Kontroller bestimmbar ist.

4. Verfahren nach einem der vorhergehenden Ansprüche, wobei die Code-Sequenz-Nummern (CSN) durch M Bits dargestellt sind, und die Steuerungsdaten eine Größe enthalten, die durch die M-P stärksten Gewichtungsbits eines fortlaufenden Wertes der Code-Sequenz-Nummer, die durch den ersten Kontroller benutzt wird, dargestellt ist, wobei M und P ganze Zahlen sind mit $0 \leq P < M$.

5. Verfahren nach den Ansprüchen 2 und 4, wobei die P schwächsten Gewichtungsbits eines Initialisierungswerts der verschobenen Code-Sequenz-Nummer in einer Befehlsnachricht zum Übergehen angegeben sind.

6. Verfahren nach Anspruch 4, wobei das Vorrücken der verschobenen Code-Sequenz-Nummer, die vom zweiten Kontroller (61) benutzt wird, in Bezug auf diejenige, die vom ersten Kontroller (60) genutzt wird, durch Vergrößern der Größe verwirklicht wird, die in den vom ersten Kontroller empfangenen Steuerungsdaten enthalten ist und durch Zuweisen der M-P Bits der folglich auf M-P stärkste Gewichtungsbits angewachsenen Größe zu einem Initialisierungswert der verschobenen Nummer.

7. Verfahren nach den Ansprüchen 2 und 6, wobei die vergrößerte Größe in der Befehlnachricht zum Übergehen angegeben ist.

8. Verfahren nach Anspruch 5 oder 6, wobei der Initialisierungswert der verschobenen Nummer mindestens einem von dem Funkterminal (14) und vom zweiten Kontroller (61) bestimmbaren Initialisierungszeitfenster entspricht.

9. Verfahren nach einem der vorherigen Ansprüche, wobei die Steuerungsdaten die Daten enthalten, die typisch sind für die Verschiebung zwischen der Code-Sequenz-Nummer, die vom ersten Kontroller (60) benutzt wird, und einer Zeitreferenz, die am zweiten Kontroller verfügbar ist.

10. Verfahren nach Anspruch 9, wobei die Verschiebung vom Terminal (14) auf der Basis von empfangenen Funksignalen gemessen wird, die von einer mit dem zweiten Kontroller (61) verbundenen Basisstation (71) stammen und die Information bezüglich der Zeitreferenz enthalten.

11. Verfahren nach Anspruch 10, wobei die Zeitreferenz einen für eine mit dem zweiten Kontroller (61) verbundene Basisstation (71) gültigen Zähler für die Zeitfenster umfasst.

12. Verfahren nach den Ansprüchen 4 und 10, wobei die Information bezüglich der Zeitreferenz einer Nummer eines Zeitfensters entspricht, die durch Q Bits dargestellt wird, wobei Q eine ganze Zahl ist mit P<Q<M.

13. Verfahren nach einem der Ansprüche 1 bis 12, wobei die Steuerungsdaten vom ersten Kontroller (60) zum zweiten Kontroller (61) mit Hilfe des Kernnetzes (30) weitergeleitet werden.

14. Verfahren nach einem der Ansprüche 1 bis 13, wobei die ersten und zweiten Funkzugriffshilfsmittel verschiedene Trägerfrequenzen umfassen.

15. Verfahren nach einem der Ansprüche 1 bis 14, wobei der erste und zweite Kontroller (60, 61) zu verschiedenen Zugriffsnetzen gehören.

16. Verfahren nach einem der Ansprüche 1 bis 14 wobei die ersten und zweiten Kontroller (60, 61) am gleichen Netzknoten angeordnet sind, und bezogen auf den ersten und zweiten Weg für zumindest einen Teil der Kommunikationsprotokolle, welche die Funktionen der Codierung und der Decodierung der Information einschließen, verschiedene Schaltungen umfassen, wobei die Schaltungen asynchron miteinander kommunizieren.

17. Zellulares Zugriffsnetzsystem zur Funkkommunikation, das mindestens einen Funknetzkontroller umfasst, der die Mittel aufweist, um die Schritte eines Verfahrens nach einem der vorgenannten Ansprüche durchzuführen.

## Claims

1. Method of controlling a circuit mode communication logical channel between a radio terminal (14) and a cellular radiocommunication infrastructure, the infrastructure comprising at least one core network (30), radio network controllers (60, 61) linked to the core network and comprising first and second controllers, and base stations (70, 71) provided with radio interfaces and each linked to one of the radio network controllers, the method comprising the following steps:

   - establishing at least one first communication path between the core network and the terminal, passing through one of the base stations (70) using a first radio access resource and through the first controller (60) constituting a master controller for said first path;
   - transmitting information pertaining to the logical channel along the first communication path;
   - establishing at least one second communication path between the core network and the terminal, passing through one of the base stations (71) using a second radio access resource, different from the first resource, and through the second controller (61) constituting a master controller for said second path; and
   - transmitting information pertaining to the logical channel along the second communication path,

   **characterized in that** the information transmitted along each communication path is ciphered in a portion of said path going from the master controller to the radio terminal, the ciphering being performed as a function of parameters comprising a secret key (CK) and a ciphering sequence number (CSN) combined with said key, whereby the master controller and the terminal jointly increment the ciphering sequence number at the rate of frames of determined duration, so as to have the same ciphering parameters to allow deciphering of the information,

   the second path is established in a transfer procedure comprising transmitting adjustment data from the first controller to the second controller, a phase of simultaneous transmission of radio signals on the first and second access resources by the respective base stations (70, 71) of the first and second paths, then suppressing the first path,

   the radio signals transmitted on the first and second access resources in the phase of simultaneous transmission transport the same information, said information being ciphered by the second controller (61) with a ciphering sequence number which is offset in advance with respect to that used by the first controller (60) to encipher the information transmitted along the first path,

   and the radio terminal (14) switches over from the first access resource to the second access resource in the phase of simultaneous transmission, by advancing the ciphering sequence number so as to align it with the offset number used by the second controller (61).

2. Method according to Claim 1, wherein the transfer procedure comprises, after the reception of the adjustment data by the second controller (61), the transmission of a switchover control message from the second controller to the radio terminal (14) through the first controller (60).

3. Method according to Claim 2, wherein the switchover control message indicates, with respect to a time reference available to the radio terminal (14) and to the second controller (61), an initialization frame to which an initialization value of the offset ciphering sequence number corresponds, said initialization value being determinable by the radio terminal and by the second controller.

4. Method according to any one of the preceding claims, wherein the ciphering sequence numbers (CSN) are represented on M bits, and the adjustment data comprise a quantity represented by the M-P most significant bits of a current value of the ciphering sequence number used by the first controller, M and P being integers such that $0 \leq P < M$.

5. Method according to Claims 2 and 4, wherein the P least significant bits of an initialization value of the offset ciphering sequence number are indicated in the switchover control message.

6. Method according to Claim 4, wherein the advance of the offset ciphering sequence number used by the second controller (61) with respect.to that used by the first controller (60) is effected by increasing said quantity contained in the adjustment data received from the first controller, and by allocating the M-P bits of the quantity thus increased to the M-P most significant bits of an initialization value of the offset number.

7. Method according to Claims 2 and 6, wherein said increased quantity is indicated in the switchover control message.

8. Method according to Claim 5 or 6, wherein the initialization value of the offset number corresponds to at least one initialization frame determinable by the radio terminal (14) and by the second controller (61).

9. Method according to any one of the preceding claims, wherein the adjustment data comprise data representative of an offset between the ciphering sequence number used by the first controller (60) and a time reference available to the second controller.

10. Method according to Claim 9, wherein said offset is measured by the terminal (14) on the basis of radio signals received from a base station (71) linked to the second controller (61) and carrying information relating to said time reference.

11. Method according to Claim 10, wherein said time reference comprises a frame counter maintained for a base station (71) linked to the second controller (61).

12. Method according to Claims 4 and 10, wherein the information relating to said time reference corresponds to a frame number represented on Q bits, Q being an integer such that $P < Q < M$.

13. Method according to any one of Claims 1 to 12, wherein the adjustment data are transmitted from the first controller (60) to the second controller (61) through the core network (30).

14. Method according to any one of Claims 1 to 13, wherein the first and second radio access resources comprise different carrier frequencies.

15. Method according to any one of Claims 1 to 14, wherein the first and second controllers (60, 61) belong to different access networks.

16. Method according to any one of Claims 1 to 14 wherein the first and second controllers (60, 61) are situated at a common network node, and comprise separate circuits in relation to the first and second paths, for at least some of the communication protocols including the information ciphering and deciphering functions, whereby said circuits communicate with one another asynchronously.

17. Access network of a cellular radiocommunication system comprising at least one radio network controller comprising the means for carrying out the steps of a method according to any one of the preceding claims.

FIG.1.

EP 1 158 827 B1

FIG.2.

COUCHE 3

COUCHE 2

COUCHE 1

15A

RRC

RLC — 16A

MAC — 17A

CODAGE/MULTIPLEXAGE — 18A

RADIO — 19A

15B

RRC

16B — RLC

17B — MAC

18B — CODAGE/MULTIPLEXAGE

19B — RADIO

Uu

UTRAN

UE

EP 1 158 827 B1

FIG.3.

NOUVEAU
BLOC          N

CSN₀ →   ┌──────────────┐  ╱23
         │  COMPTEUR    │
START →   │  32 BITS     │
         └──────────────┘
              │ CSN        BEARER    DIRECTION    LENGTH

CK →     ┌──────────────────────────────────────────────┐
         │   ALGORITHME  DE  CHIFFREMENT                 │
         └──────────────────────────────────────────────┘
                  ╱21              MASQUE           ╱22         TrBk →

RLC-PDU ─────────────────────────────────────────────────→

                                              20

┌──────────┐ ╱30
│   MSC    │
└──────────┘
      Iu        Iu
  60 ╱              ╲ 61
┌──────────┐   ┌──────────┐
│   RNC    │   │   RNC    │
└──────────┘   └──────────┘
   Iub            Iub
┌──────┐ ╱70   ┌──────┐ ╱71
│  BS  │       │  BS  │
└──────┘       └──────┘

FIG.4.

FIG.5.

FIG.6.

FIG. 7.